(19) Europäisches Patentamt
European Patent Office
Office européen des brevets

(11) EP 4 401 184 A1

(12) EUROPEAN PATENT APPLICATION
published in accordance with Art. 153(4) EPC

(43) Date of publication:
17.07.2024 Bulletin 2024/29

(51) International Patent Classification (IPC):
H01M 10/04 (2006.01)    H01M 10/0587 (2010.01)

(21) Application number: 23762750.0

(52) Cooperative Patent Classification (CPC):
Y02E 60/10; Y02P 70/50

(22) Date of filing: 17.02.2023

(86) International application number:
PCT/CN2023/076839

(87) International publication number:
WO 2023/165349 (07.09.2023 Gazette 2023/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 04.03.2022 CN 202210209795

(71) Applicant: Ningde Amperex Technology Limited
Ningde, Fujian 352100 (CN)

(72) Inventors:
• SU, Shiwei
Ningde, Fujian 352100 (CN)
• DENG, Daolin
Ningde, Fujian 352100 (CN)
• YANG, Xingfu
Ningde, Fujian 352100 (CN)
• CHEN, Wen
Ningde, Fujian 352100 (CN)

(74) Representative: Icosa
83 avenue Denfert-Rochereau
75014 Paris (FR)

(54) **ELECTROCHEMICAL APPARATUS AND ELECTRICAL DEVICE**

(57) This application discloses an electrochemical apparatus and an electric device. The electrochemical apparatus includes an electrode assembly having a winding structure, where the electrode assembly includes a first electrode plate and a second electrode plate, an end of the first electrode plate is provided with a first zone which is connected to a first tab, and an end of the second electrode plate is provided with a second zone which is connected to a second tab. Along a winding direction from inside to outside of the winding structure, the first electrode plate is located on the inner side of the electrode assembly relative to the second electrode plate, and the first zone exceeds the second zone by a winding length of less than one turn. Observed along a width direction of the first electrode plate, an included angle between a half line from a winding center to a geometric center of the first zone and a half line from the winding center to a geometric center of the second zone is θ, satisfying: 30°≤θ≤270°.In this application, an effective current path length of the outermost turn of the first electrode plate located on the inner side of the winding structure is extended, so that the first zone exceeds the second zone, reducing a magnetic field produced by the winding structure of the electrode assembly and reducing electromagnetic interference caused by the electrochemical apparatus on the electric device.

FIG. 3

**Description**

**TECHNICAL FIELD**

This application relates to the field of energy storage technologies, and in particular, to an electrochemical apparatus and an electric device.

**BACKGROUND**

For batteries with electrode assemblies featuring a winding structure, the winding structure may generate a strong axial magnetic field on both end surfaces of the winding body due to a spiral involute structure of the winding structure and the non-overlapping property of the positive and negative electrode plates. The magnetic field interferes with a surrounding electric device and affects normal use of the electric device. Especially with an increase in battery capacity and battery output power, the interference of the axial magnetic field on the electric device increases accordingly.

**SUMMARY**

In view of this, it is necessary to provide an electrochemical apparatus that can reduce and even eliminate the axial magnetic field.

According to a first aspect of this application, an electrochemical apparatus is provided. The electrochemical apparatus includes an electrode assembly, where the electrode assembly is a winding structure, and the electrode assembly includes a first electrode plate and a second electrode plate. A winding end of the first electrode plate is provided with a first zone, the first zone is connected to a first tab. A winding end of the second electrode plate is provided with a second zone, the second zone is connected to a second tab. Along a winding direction from inside to outside of the winding structure, the first electrode plate is located on the inner side of the electrode assembly relative to the second electrode plate, and the first zone exceeds the second zone, the first zone exceeding the second zone by a winding length of less than one turn. As viewed along a width direction of the first electrode plate, an included angle between a half line from a winding center of the electrode assembly to a geometric center of the first zone and a half line from the winding center to a geometric center of the second zone is θ, satisfying: 30°≤θ≤270°.

The inventors of this application have found through research that batteries with the winding structure have a special spiral involute structure and a non-overlapping property of positive and negative electrode plates. In this case, an effective current path length of the first electrode plate located on an inner side of the winding structure is shorter than that of the second electrode plate located on an outer side of the winding structure to generate a strong axial magnetic field on both end surfaces of the winding body. For the electrochemical apparatus according to this application, an effective length of the outermost turn of the first electrode plate located on an inner side of the winding structure is extended to make the first zone exceed the second zone. When the electrode assembly is discharged and generates an electric current, a magnetic field produced by a part of the first electrode plate exceeding the second zone can at least partially cancel the magnetic field produced on two axial ends of the spiral involute structure. This effectively reduces the magnetic field produced by the winding structure of the electrode assembly and further reduces interference of the electrochemical apparatus on a surrounding electric device.

In some embodiments, 90°≤θ≤240°. When the included angle θ falls within the foregoing range, the magnetic field produced by the part of the first electrode plate exceeding the second zone can better cancel the magnetic field produced on the two axial ends by the first electrode plate inward of the winding structure and the second electrode plate outward of the winding structure. In this way, the interference caused by the electrochemical apparatus on the surrounding electric device can be further reduced.

In some embodiments, the number of winding turns for the electrode assembly is n, satisfying: 3≤n≤40. The number of winding turns n for the electrode assembly being within the foregoing range can provide good demagnetization effects.

In some embodiments, 7≤n≤40. When the number of winding turns n for the electrode assembly falls within the foregoing range, in a case that the first electrode plate slightly exceeds the second zone, the magnetic field produced on the two axial ends of the electrode assembly, by the first electrode plate inward of the winding structure and the second electrode plate outward of the winding structure, can be better canceled. In this case, an energy density of the electrochemical apparatus is further increased while the interference caused by the electrochemical apparatus on the surrounding electric device can be further reduced.

In some embodiments, the first electrode plate is a positive electrode plate, and the second electrode plate is a negative electrode plate.

In some embodiments, along the width direction of the first electrode plate, the electrode assembly includes a first side and a second side disposed opposite to each other. The first tab includes a first connecting portion and a first extending portion, where the first connecting portion is connected to the first zone, and the first extending portion is connected to the first connecting portion and located on the first side. The second tab includes a second connecting portion and a second extending portion, where the second connecting portion is connected to the second zone, and the second extending portion is connected to the second connecting portion and located on the second side. The foregoing setting can reduce the risk of mutual interference between the first electrode plate and the second electrode plate in the electrode assembly while facilitating installation of the electrode assembly.

In some embodiments, the electrochemical apparatus further includes an electrode piece and a housing. The electrode assembly is disposed inside the housing, the first extending portion is connected to the electrode piece, and the second extending portion is connected to the housing. The electrode piece can facilitate an electrical connection between the electrochemical apparatus and a device body of the electric device.

In some embodiments, the electrode assembly further includes a separator. The separator is disposed between the first electrode plate and the second electrode plate, and along the winding direction from inside to outside of the winding structure, a winding end of the separator exceeds the first electrode plate. The separator can isolate the first electrode plate from the second electrode plate and the housing, thereby reducing the risk of an inner short-circuit of the electrochemical apparatus.

In some embodiments, the electrochemical apparatus further includes an insulator. The insulator is disposed between the housing and the electrode assembly. The insulator can isolate two ends in the width direction of the first electrode plate from the housing, thereby reducing the risk of an inner short-circuit of the electrochemical apparatus.

According to a second aspect of this application, an electric device is provided. The electric device includes the electrochemical apparatus according to any one of the foregoing embodiments.

By using the electrochemical apparatus according to any one of the foregoing embodiments, the electric device has less electromagnetic interference.

## BRIEF DESCRIPTION OF DRAWINGS

FIG. 1 is a schematic structural diagram of an electrochemical apparatus according to an embodiment of this application.

FIG. 2 is a cross-sectional view of an electrochemical apparatus according to an embodiment of this application.

FIG. 3 is a top view of an electrode assembly according to an embodiment of this application.

FIG. 4 is a schematic diagram of generating an axial magnetic field by a winding structure according to this application.

FIG. 5 is a curve diagram illustrating a relationship between an included angle $\theta$ and magnetic flux densities on the upper end surface and the lower end surface of the electrode assembly according to this application.

FIG. 6 is a schematic diagram of a relationship between the magnetic flux density on the upper end surface and the number of winding turns according to this application.

FIG. 7 is a schematic diagram of a relationship between the magnetic flux density on the lower end surface and the number of winding turns according to this application.

FIG. 8 is a schematic structural diagram of an electrode assembly according to an embodiment of this application.

FIG. 9 is a schematic structural diagram of an electrochemical apparatus according to an embodiment of this application.

FIG. 10 is a cross-sectional view of an electrochemical apparatus according to an embodiment of this application.

FIG. 11 is a schematic diagram of an electric device according to an embodiment of this application.

Reference signs of main components

| | |
|---|---|
| Electric device | 1000 |
| Electrochemical apparatus | 100 |
| Electrode assembly | 10 |
| First electrode plate | 11 |
| First zone | 111 |
| Second electrode plate | 12 |
| Second zone | 121 |
| First side | 13 |
| Second side | 14 |

(continued)

| | |
|---|---|
| Separator | 15 |
| First tab | 20 |
| First connecting portion | 21 |
| First extending portion | 22 |
| Second tab | 30 |
| Second connecting portion | 31 |
| Second extending portion | 32 |
| Electrode piece | 40 |
| Housing | 50 |
| Top wall | 51 |
| Side wall | 52 |
| Bottom wall | 53 |
| Conductive part | 531 |
| Accommodating space | 54 |
| Sealing piece | 60 |
| First connecting piece | 70 |
| Second connecting piece | 80 |
| Device body | 200 |

## DETAILED DESCRIPTION OF EMBODIMENTS

The following describes the technical solutions in the embodiments of this application with reference to the accompanying drawings in the embodiments of this application. Apparently, the described embodiments are only some rather than all of the embodiments of this application.

It should be noted that, when one component is deemed as being "connected to" another component, it can be directly connected to the another component, or there can be a component in between. When one component is deemed as being "disposed on" another component, it can be directly disposed on the another component, or there can be a component in between. The terms "top", "bottom", "upper", "lower", "left", "right", "front", "rear", and other similar expressions as used herein are for illustration only.

The term "perpendicular" is used to describe an ideal state between two parts. In the state of actual production or use, the two parts may be in an approximately perpendicular state. For example, combined with a numerical description, perpendicular may indicate that an included angle between two straight lines is $90\pm10°$, or perpendicular may indicate that a dihedral angle of two planes is $90°\pm10°$, or perpendicular may indicate that an included angle between a straight line and a plane is $90\pm10°$. The two parts described as "being perpendicular" may not be absolute straight lines or planes, but may roughly be straight lines or planes. The parts extending as straight lines or planes in the overall direction can be considered as "straight lines" or "planes" from a macroscopic perspective.

The term "parallel" is used to describe an ideal state between two parts. In the state of actual production or use, the two parts may be in an approximately parallel state. For example, combined with a numerical description, parallel may indicate that an included angle between two straight lines is $180°\pm10°$, parallel may further indicate that a dihedral angle of two planes is $180°\pm10°$, and parallel may still further indicate that an included angle between a straight line and a plane is $180°\pm10°$. The two parts described as "being parallel" may not be absolute straight lines or planes, but may roughly be straight lines or planes. The parts extending as straight lines or planes in the overall direction can be considered as "straight lines" or "planes" from a macroscopic perspective.

Unless otherwise defined, all technical and scientific terms used herein shall have the same meanings as commonly understood by those skilled in the art to which this application belongs. The terms used herein in the specification of this application are only used to describe specific embodiments, and are not intended to limit this application.

This application discloses an electrochemical apparatus. The electrochemical apparatus includes an electrode assembly, where the electrode assembly is a winding structure, and the electrode assembly includes a first electrode plate and a second electrode plate. A winding end of the first electrode plate is provided with a first zone, the first zone is connected to a first tab. A winding end of the second electrode plate is provided with a second zone, the second zone is connected to a second tab. Along a winding direction from inside to outside of the winding structure, the first electrode plate is located on the inner side of the electrode assembly relative to the second electrode plate, and the first zone exceeds the second zone, the first zone exceeding the second zone by a winding length of less than one turn. As viewed along a width direction of the first electrode plate, an included angle between a half line from a winding center of the electrode assembly to a geometric center of the first zone and a half line from the winding center to a geometric center of the second zone is θ, satisfying 30°≤θ≤270°.

The inventors of this application have found through research that batteries with the winding structure have a special spiral involute structure and a non-overlapping property of positive and negative electrode plates. In this case, an effective current path length of the first electrode plate located on an inner side of the winding structure is shorter than that of the second electrode plate located on an outer side of the winding structure to generate a strong axial magnetic field on both end surfaces of the winding body. In this application, an effective length of the outermost turn of the first electrode plate located on an inner side of the winding structure is extended to make the first zone exceed the second zone. When the electrode assembly is discharged and generates an electric current, a magnetic field produced by a part of the first electrode plate exceeding the second zone can at least partially cancel the magnetic field produced on two axial ends of the spiral involute structure. This effectively reduces the magnetic field produced by the winding structure of the electrode assembly and further reduces interference of the electrochemical apparatus on a surrounding electric device.

The following describes some embodiments of this application with reference to the accompanying drawings. In absence of conflicts, the following embodiments and features in the embodiments can be combined with each other.

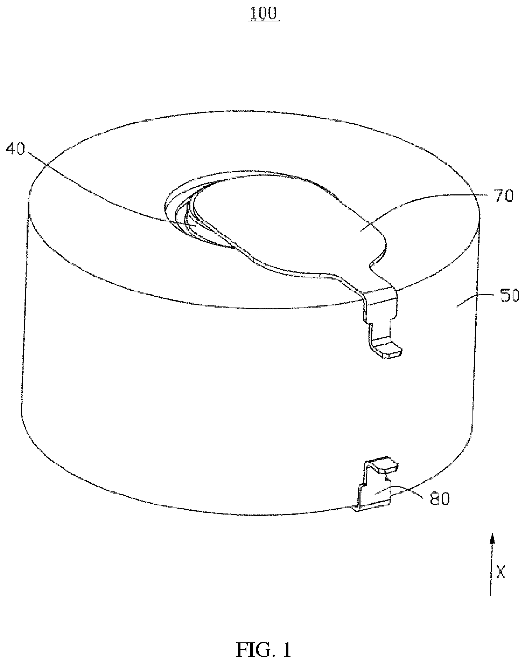

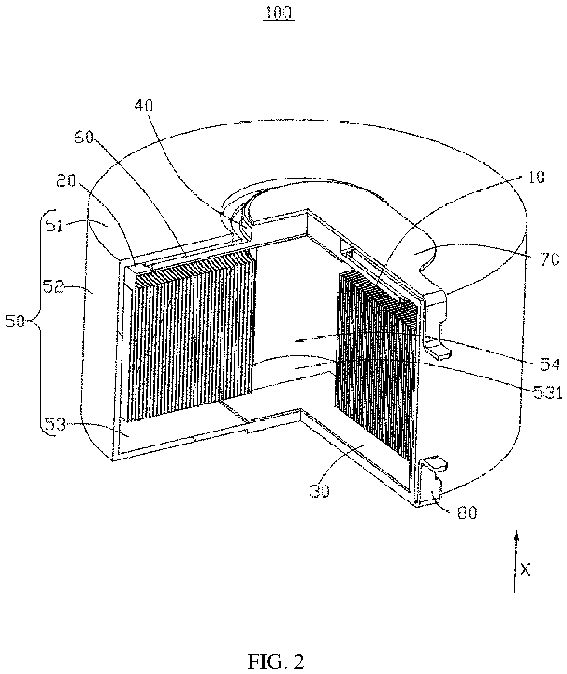

Referring to FIG. 1 to FIG. 3, an embodiment of this application provides an electrochemical apparatus 100. The electrochemical apparatus 100 includes an electrode assembly 10, where the electrode assembly 10 is a winding structure, and the electrode assembly 10 includes a first electrode plate 11 and a second electrode plate 12. Along a winding direction from inside to outside of the winding structure, the first electrode plate 11 is located on the inner side of the electrode assembly 10 relative to the second electrode plate 12. A first tab 20 is configured to connect to the first electrode plate 11, and a second tab 30 is configured to connect to the second electrode plate 12.

A separator 15 is disposed between the first electrode plate 11 and the second electrode plate 12. The first electrode plate 11, the separator 15, and the second electrode plate 12 are wound to form the electrode assembly 10. The separator 15 is configured to isolate the first electrode plate 11 from the second electrode plate 12, reducing the risk of a short-circuit of the electrochemical apparatus 100.

One of the first electrode plate 11 and the second electrode plate 12 is a positive electrode plate, and the other one is a negative electrode plate. The first tab 20 and the first electrode plate 11 have the same polarity, and the second tab 30 and the second electrode plate 12 have the same polarity. In some embodiments, the first tab 20 is a positive electrode tab, and the second tab 30 is a negative electrode tab.

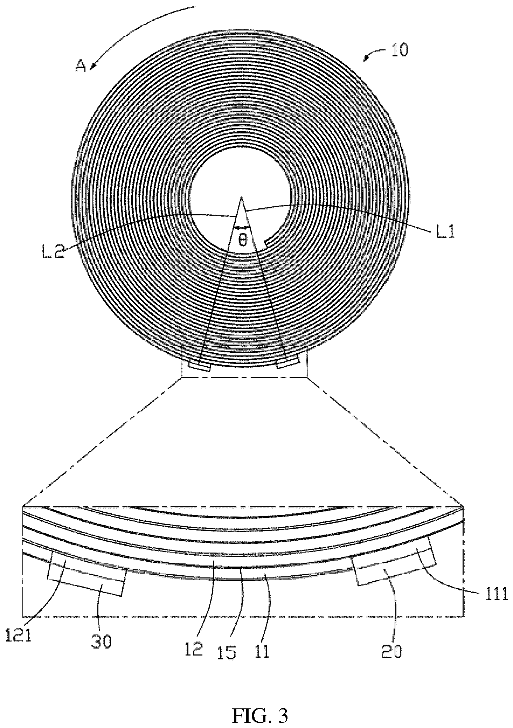

In some embodiments, referring to FIG. 3, a winding end of the first electrode plate 11 is provided with a first zone 111, the first zone 111 is configured to connect to the first tab 20. A winding end of the second electrode plate 12 is provided with a second zone 121, the second zone 121 is configured to connect to the second tab 30. Along the winding direction from inside to outside of the winding structure, the first zone 111 exceeds the second zone 121, the first zone 111 exceeding the second zone 121 by a winding length of less than one turn. As viewed along a width direction of the first electrode plate 11, a half line from a winding center of the electrode assembly 10 to a geometric center of the first zone 111 is L1, and a half line from the winding center of the electrode assembly 10 to a geometric center of the second zone 121 is L2. An included angle between L1 and L2 is θ, satisfying: 30°≤θ≤270°. For ease of understanding and description, referring to an X direction and an A direction in the figure, the X direction is the width direction of the first electrode plate 11, and the A direction is the winding direction.

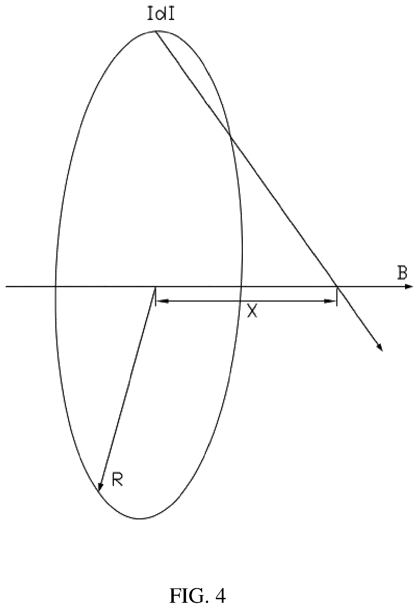

With reference to FIG. 4, the following equation holds for the electrode assembly 10 with the winding structure.

$$\vec{B} = \frac{\mu_0}{2} \cdot \frac{IR^2}{(R^2+x^2)^{3/2}} \vec{i}$$

B is the magnetic flux density, which may be used to indicate strength of a magnetic field, R is a radius of a circle, and x is a distance from the center of the circle to a point on the axis. It can be seen from the foregoing equation that for a concentric winding structure, magnetic fields on the axis cannot be canceled completely, and a magnetic field of specific strength is always present.

An effective length of the outermost turn of the first electrode plate 11 is extended to make the winding end of the first electrode plate 11 exceed the winding end of the second electrode plate 12, and therefore the first zone 111 exceeds the second zone 121. When the electrode assembly 10 is discharged and generates an electric current, a magnetic field produced by a part of the first electrode plate 11 exceeding the second zone 121 can at least partially cancel a magnetic field produced on two axial ends of a spiral involute structure formed by a plurality of layers of the first electrode plate 11 and the second electrode plate 12. This effectively reduces the magnetic field produced by the winding structure of the electrode assembly 10, thereby reducing electromagnetic interference of the electrochemical apparatus 100 on the surrounding electric device.

In some embodiments, along the winding direction from inside to outside of the winding structure, the number of winding turns of the first electrode plate 11 is the same as the number of winding turns of the second electrode plate 12. The number of winding turns of the first electrode plate 11 or the number of winding turns of the second electrode plate 12 is the number of winding turns for the electrode assembly 10, and the number of winding turns for the electrode assembly 10 is n.

In other embodiments, along the winding direction from inside to outside of the winding structure, the winding end of the first electrode plate 11 exceeds the winding end of the second electrode plate 12 (not shown in the figure). In some embodiments, a length of the first electrode plate 11 exceeds that of the second electrode plate 12 by more than one turn, so that the number of winding turns of the first electrode plate 11 is greater than the number of winding turns of the second electrode plate 12.

In other embodiments, along the winding direction from inside to outside of the winding structure, the winding end of the second electrode plate 12 exceeds the winding end of the first electrode plate 11 (not shown in the figure). In some embodiments, the second electrode plate 12 exceeds the first electrode plate 11 by a length of more than one turn, so that the number of winding turns of the first electrode plate 11 is smaller than the number of winding turns of the second electrode plate 12.

In order to verify the effect on canceling the axial magnetic field produced by the electrochemical apparatus 100 in this application, a number of comparative experiments were performed as follows.

Experiment 1:

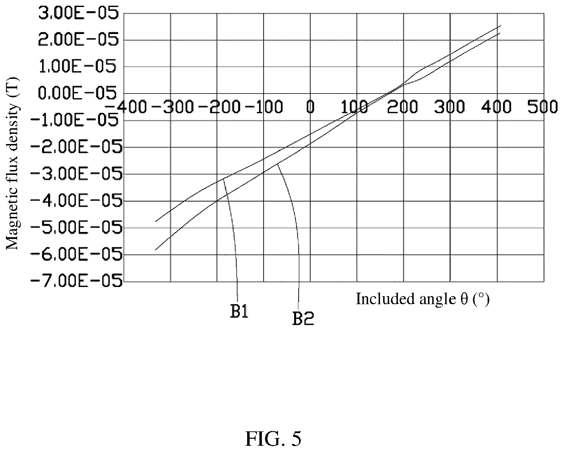

The first electrode plate 11 was used as a positive electrode plate, and the second electrode plate 12 was used as a negative electrode plate. The number of winding turns n for the electrode assembly 10 was 17 layers. A position where the second electrode plate 12 and the second tab 30 are welded was changed so as to change the included angle $\theta$. When the included angle $\theta$ was negative, the second zone 121 exceeded the first zone 111 along the winding direction from inside to outside of the winding structure. When the included angle was positive, the first zone 111 exceeded the second zone 121 along the winding direction from inside to outside of the winding structure. Magnetic flux densities on an upper end surface and a lower end surface in the axial direction of the electrode assembly 10 were recorded for different included angles $\theta$. The recorded results are shown in Table 1 and FIG. 5.

**Table 1: Relationship between included angles $\theta$ and magnetic flux densities**

| Included angle $\theta$ (°) | Magnetic flux density B 1/$10^{-6}$(T) on the upper end surface | Magnetic flux density B2/$10^{-6}$(T) on the lower end surface |
|---|---|---|
| -330 | -47.9 | -58.4 |
| -270 | -40.5 | -49.3 |
| -210 | -34.3 | -41.8 |
| -150 | -29.0 | -35.3 |
| -120 | -26.4 | -32.1 |
| -90 | -23.7 | -28.9 |
| -60 | -21.1 | -25.7 |
| -30 | -18.4 | -22.5 |
| 0 | -15.6 | -19.5 |
| 30 | -12.9 | -16.2 |
| 60 | -10.2 | -12.9 |
| 90 | -7.50 | -9.66 |
| 120 | -5.07 | -5.86 |
| 150 | -2.10 | -3.09 |
| 210 | 4.03 | 2.84 |
| 240 | 8.04 | 4.92 |
| 300 | 13.7 | 10.8 |

(continued)

| Included angle θ (°) | Magnetic flux density B 1/10⁻⁶(T) on the upper end surface | Magnetic flux density B2/10⁻⁶(T) on the lower end surface |
|---|---|---|
| 360 | 19.4 | 16.7 |
| 420 | 25.0 | 22.5 |

Where, positive and negative values of the magnetic flux density represent opposite magnetic field directions.

In some embodiments, referring to Table 1 and FIG. 5, the included angle θ satisfies 90°≤θ≤240°. When the included angle θ falls within this range, the magnetic field produced by the part of the first electrode plate 11 exceeding the second zone 121 can better cancel the magnetic field produced on the two axial ends of the electrode assembly 10, further reducing the interference caused by the electrochemical apparatus 100 on the surrounding electric device.

Experiment 2:

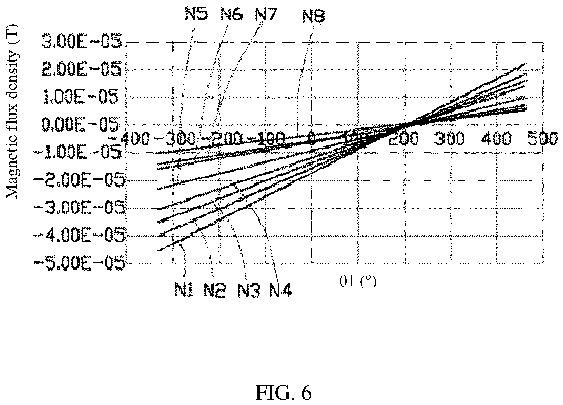

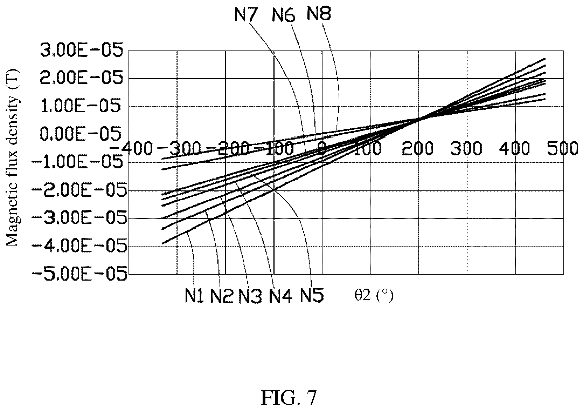

A plurality of electrode assemblies 10 were provided. Each electrode assembly 10 had a different number of winding turns n. Experiment 1 was performed on each electrode assembly 10 to obtain results. Calculation was performed based on the result of each experiment and optimal included angles were recorded. Based on the specified number of winding turns n in an experiment, the optimal included angle was an included angle when the magnetic flux densities on the upper end surface and the lower end surface of the electrode assembly 10 were the smallest. The recorded results are shown in Table 2, FIG. 6, and FIG. 7.

**Table 2: Optimal included angles for different numbers of winding turns**

| Number of winding turns n (layer) | | Optimal included angle θ1 (°) on the upper end surface | Optimal included angle θ2 (°) on the lower end surface |
|---|---|---|---|
| N1 | 17 | 165.21 | 185.12 |
| N2 | 15 | 167.16 | 190.87 |
| N3 | 13 | 164.00 | 192.71 |
| N4 | 11 | 160.03 | 194.82 |
| N5 | 9 | 165.50 | 187.78 |
| N6 | 7 | 173.43 | 179.82 |
| N7 | 5 | 136.49 | 203.43 |
| N8 | 3 | 117.27 | 203.12 |

In some embodiments, referring to Table 2, FIG. 6, and FIG. 7, when 30°≤θ≤270° is satisfied, good demagnetization effects can still be achieved even for different numbers of winding turns n. When the number of winding turns n satisfies 3≤n≤40, good demagnetization effects are all achieved.

In some embodiments, referring to Table 2, FIG. 6, and FIG. 7, the number of winding turns for the electrode assembly 10 is n, and 7≤n≤40 is satisfied. When the number of winding turns n for the electrode assembly 10 falls within the foregoing range, in a case that the first electrode plate 11 slightly exceeds the second zone 121, the magnetic field produced on the two axial ends of the electrode assembly 10 by the first electrode plate 11 located on the inner side of the winding structure and the second electrode plate 12 located on the outer side of the winding structure can be better canceled. In this case, an energy density of the electrochemical apparatus 100 is further increased while the interference caused by the electrochemical apparatus 100 on the surrounding electric device can be further reduced.

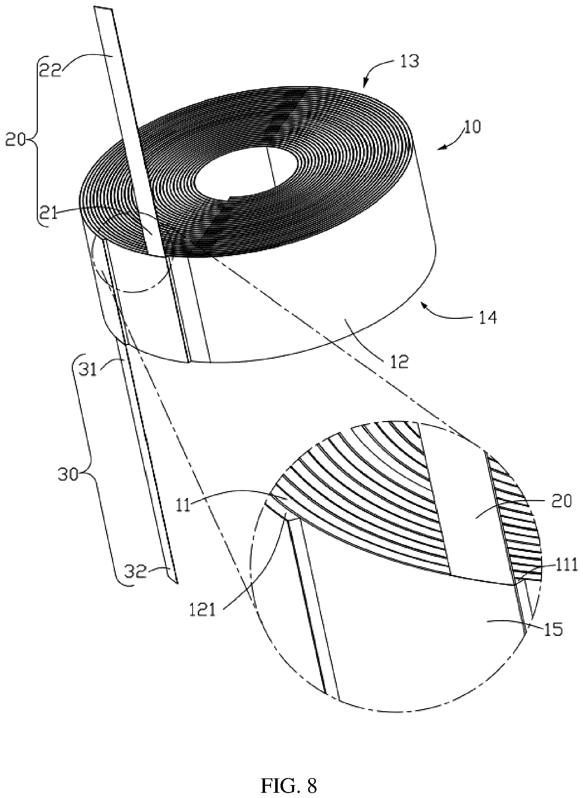

In some embodiments, referring to FIG. 8, along the winding direction from inside to outside of the winding structure, a winding end of the separator 15 exceeds the first electrode plate 11. This can reduce the risk of direct contact between the first electrode plate 11 and the second electrode plate 12 and the housing 50.

In some embodiments, along the winding direction from inside to outside of the winding structure, the winding end of the separator 15 is connected to the second electrode plate 12 by using a adhesive piece (not shown in the figure), so as to reduce the risk of curling the winding end of the separator 15. The adhesive piece may be an insulation adhesive.

In some embodiments, referring to FIG. 8, along the width direction of the first electrode plate 11, the electrode assembly 10 includes a first side 13 and a second side 14 disposed opposite to each other. The first tab 20 includes a first connecting portion 21 and a first extending portion 22, where the first connecting portion 21 is connected to the first zone 111, and the first extending portion 22 is connected to the first connecting portion 21 and located on the first side 13. The second tab 30 includes a second connecting portion 31 and a second extending portion 32, where the second connecting portion 31 is connected to the second zone 121, and the second extending portion 32 is connected to the second connecting portion 31 and located on the second side 14.

The first tab 20 and the second tab 30 are located on opposite sides of the electrode assembly 10 respectively. This can reduce the risk of mutual interference between the first tab 20 and the second tab 30 while facilitating installation of the electrode assembly 10.

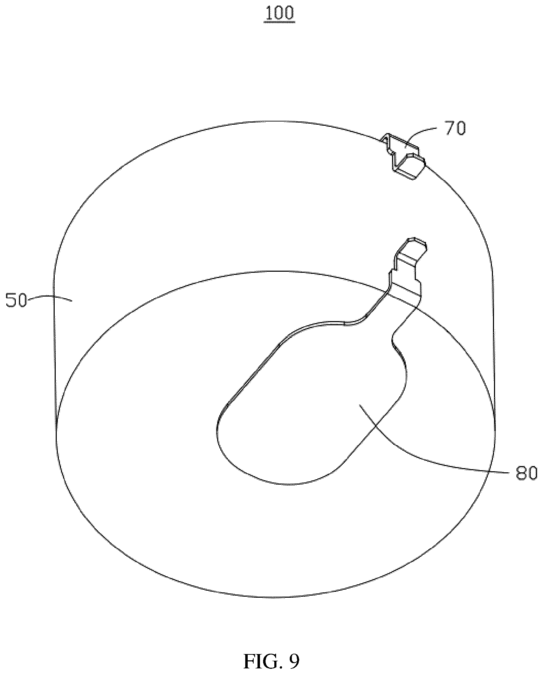

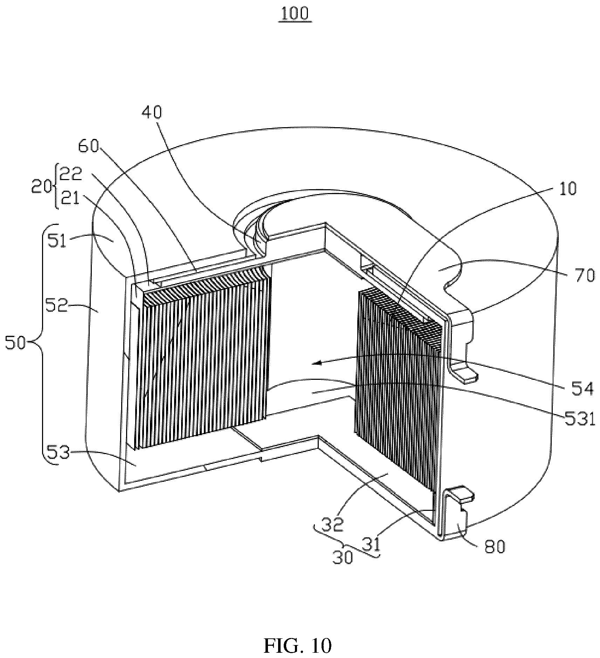

In some embodiments, referring to FIG. 9 and FIG. 10, the first connecting portion 21 and the first extending portion 22 are arranged at an included angle. In some embodiments, the second connecting portion 31 and the second extending portion 32 are arranged at an included angle.

In some embodiments, referring to FIG. 10, the electrochemical apparatus 100 further includes a housing 50, and the housing 50 includes a top wall 51, a side wall 52, and a bottom wall 53. The top wall 51 and the bottom wall 53 are connected to the side wall 52. The top wall 51, the side wall 52, and the bottom wall 53 enclose an accommodating space 54. The electrode assembly 10, the first tab 20, and the second tab 30 are all accommodated in the accommodating space 54. The housing 50 can protect the electrode assembly 10, reducing the risk of the first electrode plate 11 and the second electrode plate 12 being in direct contact with an external structure.

In some embodiments, referring to FIG. 10, the electrochemical apparatus 100 further includes an electrode piece 40. A part of the electrode piece 40 is disposed inside the accommodating space 54 for connecting to the first extending portion 22, so that the electrode piece 40 is connected to the first tab 20. A part of the electrode piece 40 is disposed outside the accommodating space 54. The electrode piece 40 may be in a shape of a column, a hemisphere, a sheet, or a combination of these shapes, which is not specifically limited herein.

In some embodiments, referring to FIG. 10, the electrochemical apparatus 100 further includes a sealing piece 60. The sealing piece 60 is disposed between the electrode piece 40 and the housing 50. The electrode piece 40 is insulatively connected to the top wall 51 through the sealing piece 60, thereby reducing the risk of a short-circuit of the electrochemical apparatus 100. The electrode piece 40 may be copper, iron, or another conductive metal, and the sealing piece 60 may be a sealant.

In some embodiments, an insulator (not shown in the figure) is disposed in the accommodating space 54 and located between the electrode assembly 10 and the housing 50. The insulator can isolate two ends of the first electrode plate 11 in the width direction from the housing 50, thereby reducing the risk of a short-circuit inside the electrochemical apparatus 100.

In some embodiments, a conductive part 531 is disposed on the bottom wall 53. The second extending portion 32 is connected to the conductive part 531, so that the second tab 30 is electrically connected to the conductive part 531. In some embodiments, the conductive part 531 may be copper, iron, or another conductive metal.

In some embodiments, referring to FIG. 10, the electrochemical apparatus 100 further includes a first connecting piece 70 and a second connecting piece 80. At least part of the first connecting piece 70 is located outside the accommodating space 54 and connected to the electrode piece 40, so that the first connecting piece 70 is electrically connected to the first tab 20. At least part of the second connecting piece 80 is located outside the accommodating space 54 and electrically connected to the conductive part 531, so that the second connecting piece 80 is electrically connected to the second tab 30.

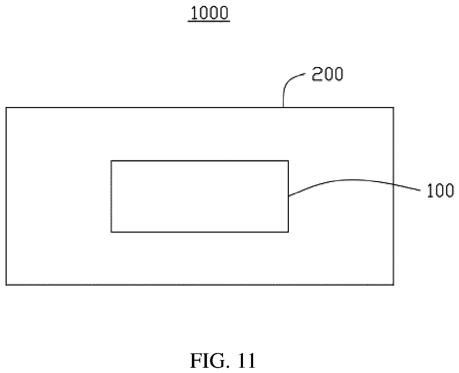

Referring to FIG. 11, an embodiment of this application further provides an electric device 1000. The electric device 1000 includes a device body 200 and the electrochemical apparatus 100. With the technical solution in any one of the embodiments of the electrochemical apparatus 100, the electric device 1000 at least has the beneficial effects brought by the technical solution of any one of the embodiments of the electrochemical apparatus 100, which are not described herein again.

Where, the first connecting piece 70 and the second connecting piece 80 of the electrochemical apparatus 100 can be electrically connected to the device body 200 of the electric device 1000, so that the electrochemical apparatus 100 can be electrically connected to the device body 200 and supply electricity to the device body 200.

The electric device 1000 in this application may be but is not limited to a clock, an illuminating lamp, a calculator, a headset, an electronic book player, a toy, a game console, a video recorder, a notebook computer, a tablet computer, a portable telephone, a portable CD player, an electronic notebook, a portable recorder, or a radio.

In addition, those of ordinary skill in the art should be aware of that the foregoing embodiments are only intended to describe this application, but not to limit this application. Appropriate modifications and variations made to the foregoing embodiments without departing from the essential spirit and scope of this application all fall within the scope of this application.

**Claims**

1. An electrochemical apparatus, comprising an electrode assembly, wherein the electrode assembly is a winding structure, and the electrode assembly comprises:

   a first electrode plate, wherein a winding end of the first electrode plate is provided with a first zone, and the first zone is connected to a first tab; and
   a second electrode plate, wherein a winding end of the second electrode plate is provided with a second zone, and the second zone is connected to a second tab;
   **characterized in that**:

   along a winding direction from inside to outside of the winding structure, the first electrode plate is located on the inner side of the electrode assembly relative to the second electrode plate, and the first zone exceeds the second zone, the first zone exceeding the second zone by a winding length of less than one turn; and as viewed along a width direction of the first electrode plate, an included angle between a half line from a winding center of the electrode assembly to a geometric center of the first zone and a half line from the winding center to a geometric center of the second zone is $\theta$, satisfying: $30° \leq \theta \leq 270°$.

2. The electrochemical apparatus according to claim 1, **characterized in that**, $90° \leq \theta \leq 240°$.

3. The electrochemical apparatus according to claim 1, **characterized in that**, the number of winding turns for the electrode assembly is n, satisfying: $3 \leq n \leq 40$.

4. The electrochemical apparatus according to claim 3, **characterized in that**, $7 \leq n \leq 40$.

5. The electrochemical apparatus according to claim 1, **characterized in that**, the first electrode plate is a positive electrode plate, and the second electrode plate is a negative electrode plate.

6. The electrochemical apparatus according to claim 1, **characterized in that**, along the width direction of the first electrode plate, the electrode assembly comprises a first side and a second side disposed opposite to each other;

   the first tab comprises a first connecting portion and a first extending portion, wherein the first connecting portion is connected to the first zone, and the first extending portion is connected to the first connecting portion and located on the first side; and
   the second tab comprises a second connecting portion and a second extending portion, wherein the second connecting portion is connected to the second zone, and the second extending portion is connected to the second connecting portion and located on the second side.

7. The electrochemical apparatus according to claim 6, **characterized in that**, the electrochemical apparatus further comprises an electrode piece and a housing, the electrode assembly is disposed inside the housing, the first extending portion is connected to the electrode piece, and the second extending portion is connected to the housing.

8. The electrochemical apparatus according to claim 1, **characterized in that**, the electrode assembly further comprises a separator, the separator is disposed between the first electrode plate and the second electrode plate, and along the winding direction from inside to outside of the winding structure, a winding end of the separator exceeds the first electrode plate.

9. The electrochemical apparatus according to claim 7, **characterized in that**, the electrochemical apparatus further comprises an insulator, and the insulator is disposed between the housing and the electrode assembly.

10. An electric device, **characterized in that**, comprising the electrochemical apparatus according to any one of claims 1 to 9.

FIG. 1

FIG. 2

FIG. 3

FIG. 4

FIG. 5

FIG. 6

FIG. 7

FIG. 8

100

FIG. 9

FIG. 10

1000

200

100

FIG. 11

## INTERNATIONAL SEARCH REPORT

| International application No. |
| --- |
| **PCT/CN2023/076839** |

**A. CLASSIFICATION OF SUBJECT MATTER**

H01M10/04(2006.01)i;H01M10/0587(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电芯, 电极, 卷, 绕, 壳, 角, 极耳, batter+, cell?, core, electrode, roll+, shell, angle, pole, tab

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114583236 A (NINGDE AMPEREX TECHNOLOGY LTD.) 03 June 2022 (2022-06-03) description, paragraphs 4-14, and figures 1-11 | 1-10 |
| X | CN 113853703 A (NINGDE AMPEREX TECHNOLOGY LTD.) 28 December 2021 (2021-12-28) description, paragraphs 53-77, and figures 1-4 | 1-10 |
| X | CN 110611116 A (GUANGDONG WEIDIAN NEW ENERGY CO., LTD.) 24 December 2019 (2019-12-24) description, paragraphs 37-69, and figures 1-7 | 1-10 |
| X | CN 204577529 U (SHANXI HENGCHANGYUAN TECHNOLOGY CO., LTD.) 19 August 2015 (2015-08-19) description, paragraphs 15-19, and figures 1-3 | 1-10 |
| A | CN 114006021 A (NINGDE AMPEREX TECHNOLOGY LTD.) 01 February 2022 (2022-02-01) entire document | 1-10 |
| A | JP 2012195132 A (TOYOTA JIDOSHA K.K.) 11 October 2012 (2012-10-11) entire document | 1-10 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **08 May 2023** | **11 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/076839**

| Patent document cited in search report | | | Publication date (day/month/year) | Patent family member(s) | | | Publication date (day/month/year) |
|---|---|---|---|---|---|---|---|
| CN | 114583236 | A | 03 June 2022 | None | | | |
| CN | 113853703 | A | 28 December 2021 | WO | 2022126414 | A1 | 23 June 2022 |
| CN | 110611116 | A | 24 December 2019 | CN | 210379288 | U | 21 April 2020 |
| | | | | WO | 2021057210 | A1 | 01 April 2021 |
| | | | | EP | 4040551 | A1 | 10 August 2022 |
| | | | | US | 2022352540 | A1 | 03 November 2022 |
| CN | 204577529 | U | 19 August 2015 | None | | | |
| CN | 114006021 | A | 01 February 2022 | None | | | |
| JP | 2012195132 | A | 11 October 2012 | JP | 5912271 | B2 | 27 April 2016 |

Form PCT/ISA/210 (patent family annex) (July 2022)